# FASCICULE DE BREVET EUROPEEN

(11) **EP 0 392 931 B1**
(45) Date de publication et mention de la délivrance du brevet: **23.02.1994**
(21) Numéro de dépôt: 90401026.1
(22) Date de dépôt: 13.04.1990
(51) Int. Cl.: G11B 5/84

(54) **Procédé pour déposer à la surface d'un disque magnétique une couche permettant le vol de têtes d'écriture/lecture en regard de ce dernier et disque magnétique en résultant**
Verfahren zum Aufbringen einer Schicht auf der Oberfläche einer Magnetplatte, die den Flug der Schreib-/Leseköpfe über der Platte erlaubt sowie eine nach dem Verfahren hergestellte Magnetplatte
Process for depositing, on a surface of a magnetic disk, a layer permitting the flight of the write/read head over the disk, and the resulting magnetic disk

(30) Priorité: 13.04.1989 FR 8904881
(43) Date de publication de la demande: 17.10.1990
(73) Titulaire: BULL S.A., 92800 Puteaux (FR)
(72) Inventeur: Roze, Danielle, F-78640 Villiers Saint-Frederic (FR); Bernstein, Pierre, F-78640 Neauphle le Chateau (FR)
(74) Mandataire: Gouesmel, Daniel

(56) Documents cités:
- EP-A- 0 174 024
- EP-A- 0 176 636
- ELEKTRONIK, vol. 34, no. 22, octobre 1985, pages 131-135, Munich, DE; "Impressionen aus einer Plattenspeicherfertigung"

## Description

La présente invention concerne un procédé pour déposer à la surface d'un disque magnétique une couche permettant le vol de têtes d'écriture/lecture en regard de ce dernier et le disque magnétique résultant de ce procédé. Elle est notamment applicable aux disques magnétooptiques utilisés dans les mémoires à disques magnétooptiques.

Les mémoires à disques magnétooptiques sont des mémoires où les informations sont enregistrées sur des disques magnétiques par exemple au moyen de transducteurs magnétiques d'écriture et lues par des dispositifs optoélectroniques comprenant un dispositif optique de focalisation plus au moins complexe associé à des transducteurs photoélectroniques et des circuits d'amplification des signaux délivrés par ces transducteurs. L'évolution technologique est telle que l'on tend à utiliser de telles mémoires car elles permettent d'obtenir des densités radiales de l'ordre de quelques milliers de pistes par centimètre et des densités longitudinales de 10 000 informations par centimètre.

Leur mode de fonctionnement repose sur l'effet magnétooptique qui concerne l'interaction d'une lumière polarisée rectiligne avec l'état magnétique du matériau constituant la couche d'enregistrement des disques magnétooptiques. Le brevet français 2.514.913 (brevet US correspondant n° 4.510.544) déposé par la Compagnie Internationale pour l'Informatique CII HONEYWELL BULL donne de plus amples détails sur l'effet magnétooptique. Les demandes de brevet français 87.13738 déposée le 5 octobre 1987 par la Société BULL S.A., sous le titre "Dispositif asservi de lecture optique et d'écriture magnétique de support d'informations", et 87.13739 déposée le 5 octobre 1987 par la Société BULL S.A., sous le titre "Dispositif de lecture optique et d'écriture magnétique d'un support d'informations" (demandes de brevets US correspondantes ser. n° 253041 et 253038) décrivent des dispositifs de lecture optique et d'écriture magnétique d'informations sur disque magnétooptique comprenant d'une part, un transducteur magnétique d'écriture des informations sur le support, disposé sur un patin volant au-dessus du support et un dispositif optoélectronique dont la plus grande partie est disposée sur ce patin. Le patin vole au-dessus du disque magnétooptique à une distance de quelques dixièmes de microns.

Les disques magnétooptiques sont désormais bien connus. L'un de ceux-ci est décrit dans la demande de brevet français n° 87.18355 (demande de brevet US correspondante ser. 291.142) déposée le 30 décembre 1987 par la Société BULL S.A., sous le titre "Milieu magnétooptique d'enregistrement résistant à la corrosion en atmosphère humide". Un tel disque magnétooptique comprend un substrat sur lequel est déposée une première couche diélectrique (par exemple en alumine ou en nitrure d'aluminium) sur laquelle est déposée une couche d'enregistrement magnétooptique. Celle-ci est constituée par un alliage comportant un ou plusieurs métaux de la première série de transition (Fe-Co-Cr-Ni-Mn) et un ou plusieurs métaux du groupe des Terres-rares lourd tel que le Terbium, le Gadolinium, ou encore le Dysprosium. Une seconde couche diélectrique est déposée sur la couche d'enregistrement magnétooptique. Cette dernière est elle-même revêtue d'une couche en oxyde de silicium (mono ou oxyde ou dioxyde de silicium) permettant de protéger la seconde couche diélectrique et la couche magnétooptique d'enregistrement contre les chocs mécaniques et la corrosion, plus particulièrement en atmosphère humide.

Il est extrêmement difficile, voire impossible, de faire voler un patin tel que celui décrit plus haut en regard d'un tel disque magnétooptique. Il est nécessaire de déposer sur celui-ci une couche dite lubrifiante qui permet le vol d'un patin comprenant un transducteur magnétique d'écriture et un dispositif optoélectronique de lecture.

De telles couches lubrifiantes sont depuis longtemps utilisées pour revêtir les disques magnétiques classiques (ces derniers sont écrits et lus au moyen de transducteurs magnétiques d'enregistrement et de lecture). Elles sont composées le plus souvent soit de silicone, soit de couches lubrifiantes incluant du carbone. De telles couches se sont révélées être inutilisables pour les disques magnétooptiques revêtues d'oxyde de silicium : les couches lubrifiantes en silicone ne permettent pas le vol d'un patin au-dessus des disques magnétooptiques, alors que les couches contenant du carbone ne sont pas transparentes à la lumière et ne permettent donc pas la lecture des informations contenues sur le disque magnétooptique.

La demanderesse a découvert de manière surprenante qu'un produit du type de ceux habituellement utilisés pour revêtir tout produit métallique afin de le protéger de l'oxydation, (dans les entrepôts, pour le stockage de ces produits), pouvait être utilisé comme couche lubrifiante pour les disques magnétooptiques du type de celui décrit ci-dessus (revêtu de couches de protection en oxyde de silicium) permettant le vol d'un patin comprenant un transducteur magnétique d'écriture et un dispositif optoélectronique de lecture. Un tel produit est vendu, sous forme de bombe aérosol . Il est constitué d'un mélange complexe de gaz vecteur à base de fréon, d'un mélange de solvants du type toluène et polychloroéthylène et d'éléments monomères oxyhydrocarbonés. On le dénommera par la suite sous le vocable de produit lubrifiant. Il est par exemple fabriqué et vendu par la Société Dow Corning GMBH de Munich, en République Fédérale d'Allemagne, sous la dénomination commerciale Molykote, (marque déposée par Dow Corning Corporation) type "Metal protector".

Selon l'invention, le procédé pour déposer à la surface d'un disque magnétique une couche permettant le vol de têtes d'écriture/lecture en regard de ce dernier, le disque magnétique comprenant un substrat sur lequel est déposée une couche magnétique d'enregistrement recouverte elle-même d'une couche de protection contre les chocs et la corrosion en oxyde de silicium, qui consiste à nettoyer au préalable le disque dans le but d'enlever les poussières,
est caractérisé en ce que, après avoir nettoyé le disque, on effectue au moins une fois la séquence comportant la suite d'opérations suivantes :
1) On projette sur le disque en rotation dans le sens de celle-ci, un produit lubrifiant comprenant d'une part une partie volatile formée de gaz vecteurs et produits solvants, et d'autre part des éléments monomères oxyhydrocarbonés lesquels sont polymérisés grâce à l'évaporation des solvants et adsorbés par la couche de protection du disque,
2) On pulvérise un solvant sur le disque, dans le sens de rotation de celui-ci, pour éliminer les molécules actives n'étant pas en interaction avec sa surface et les molécules du gaz vecteur adsorbées par celle-ci,
3) On essuie le disque pour éliminer les cristallites de polymère qui y sont en excès,

le disque étant dès lors recouvert d'une couche monomoléculaire homogène bidimensionnelle de molécules hydrocarbonées adsorbées par la couche de protection, en interaction avec la surface par un nombre limité de fonctions oxycarbonées.

L'invention concerne également un disque magnétique comprenant un substrat sur lequel est déposée une couche d'enregistrement magnétique revêtue d'une couche de protection contre la corrosion et les chocs métalliques, caractérisée en ce qu'elle comporte une couche superficielle permettant le vol de têtes d'écriture/lecture formé par une couche monomoléculaire bidimensionnelle de molécules hydrocarbonées adsorbées par la couche de protection, en interaction avec la surface par un nombre limité de fonctions oxycarbonées.

D'autres caractéristiques et avantages de la présente invention apparaîtront dans la description suivante donnée à titre d'exemple non limitatif et en se référant aux figures annexées.
La figure 1 montre l'installation permettant de mettre en oeuvre le procédé de dépôt d'une couche lubrifiante selon l'invention,
La figure 2 est une vue en coupe montrant un disque magnétooptique sur lequel va être appliqué le procédé de dépôt d'une couche lubrifiante selon l'invention,
La figure 3 composée des figures 3a et 3b montre plus en détail comment sont effectuées les opérations permettant de projeter successivement un produit lubrifiant et un produit solvant sur le disque magnétooptique de la figure 2,
La figure 4 montre sous forme d'un diagramme la succession des différentes opérations du procédé selon l'invention,
La figure 5 montre le disque magnétooptique obtenu par le procédé selon l'invention, revêtu de sa couche lubrifiante permettant le vol de têtes d'écriture et de lecture,
La figure 6 montre comment la couche lubrifiante est formée d'une couche monomoléculaire bidimensionnelle favorisant l'établissement d'un coussin d'air à la surface du disque.

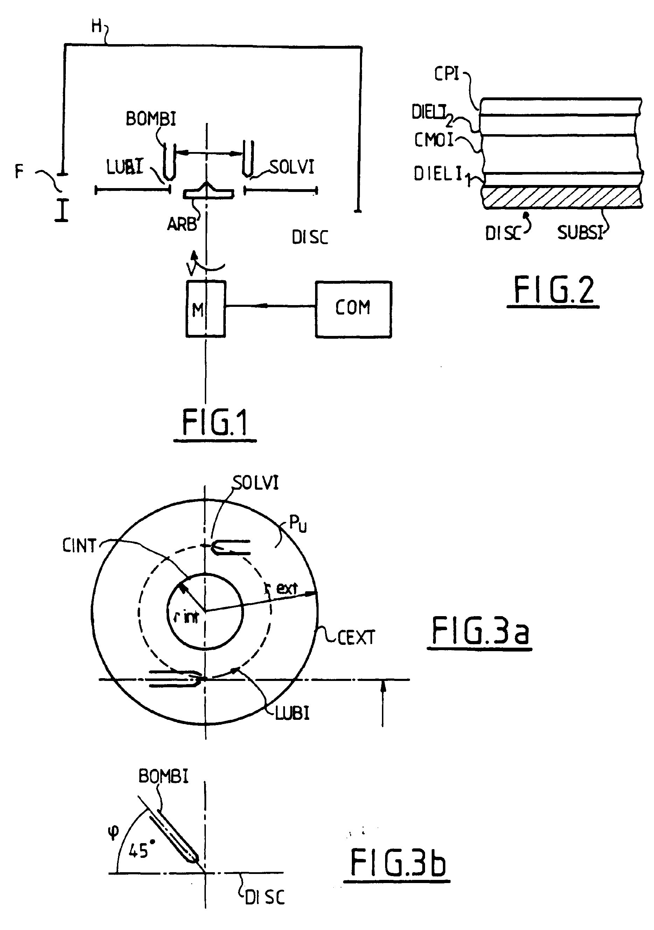

On considère la figure 1.

L'installation permettant de mettre en oeuvre le procédé selon l'invention comprend une hotte en plexiglass H qui a la forme d'un cylindre à base circulaire. Ce cylindre est muni d'une ouverture F de forme circulaire de diamètre suffisamment grand pour pouvoir introduire un disque magnétooptique DISC (dont le rayon est de l'ordre de 13 centimètres), ce disque étant introduit manuellement et placé sur le plateau d'entraînement PLE lui-même solidaire de l'arbre ARB d'un moteur électrique M. Ce moteur électrique est commandé par un dispositif de commandes COM électronique permettant de faire varier sa vitesse, entre 0 et par exemple 3700 tours par minute. Le disque est fixé sur le plateau d'entraînement par exemple par une vis non représentée pour simplifier la figure 1 qui assure un serrage manuel parfait.

Il est clair que aussi bien le moteur d'entraînement que son dispositif de commande ainsi que l'arbre du moteur et le plateau d'entraînement du disque sont d'un type couramment utilisé dans les mémoires à disques magnétiques que l'on trouve usuellement dans le commerce.

Le disque magnétooptique DISC montré à la figure 2 est identique à celui qui est décrit dans la demande de brevet français 87.18355 précitée et comprend un substrat SUBSI sur lequel est déposée une première couche diélectrique DIELI₁ (par exemple en nitrure d'aluminium AlN). Sur cette première couche diélectrique DIELI₁ est déposée la couche magnétooptique CMOI, par exemple constituée d'un alliage de fer-terbium Fe-Tb ou de fer-terbium-gadolinium Fe-Tb-Gd ou encore de Fer-Terbium-Gadolinium-Cobalt Fe-Tb-Gd-Co. Une seconde couche diélectrique DIELI₂ est déposée sur cette couche magnétooptique CMOI et une couche de protection en oxyde de silicium, à savoir CPI est déposée sur la seconde couche diélectrique. Les épaisseurs de ces différentes couches sont indiquées dans la demande de brevet français précitée.

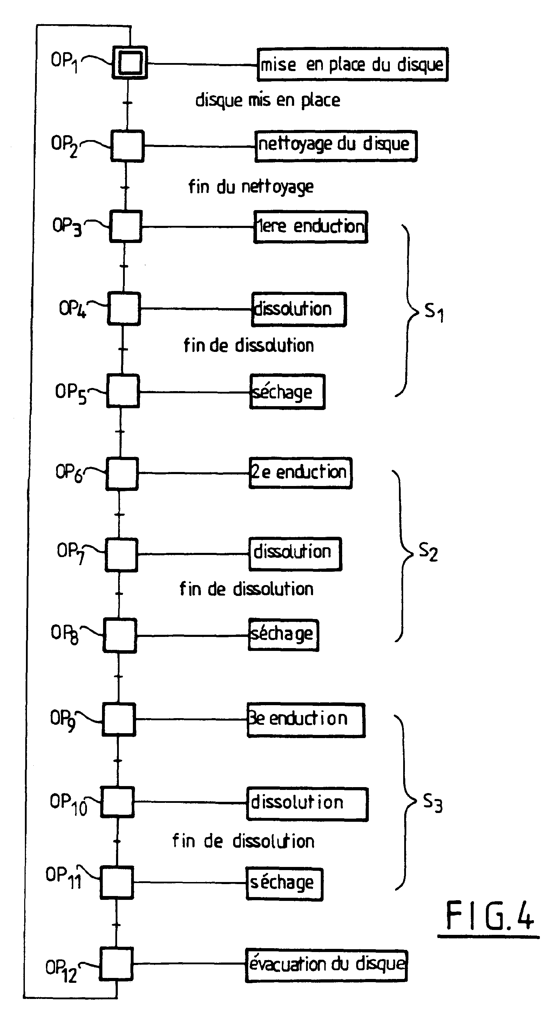

On considère les figures 3 et 4 qui permettent de décrire le procédé pour déposer une couche lubrifiante permettant le vol de têtes d'écriture/lecture sur le disque magnétooptique DISC.

Les différentes opérations ou étapes successives du procédé selon l'invention sont montrées par le graphique de la figure 4 et sont les suivantes :

### Première opération OP₁ : mise en place du disque :

Le disque est introduit manuellement par la fenêtre F et placé sur le plateau d'entraînement PLE et fixé sur celui-ci au moyen de la vis de serrage mentionnée ci-dessus. Le disque est alors mis en rotation, dans un sens prédéterminé, à une vitesse de l'ordre de 2000 tours par minute.

### Deuxième opération OP₂ : nettoyage du disque :

Dès que le disque est en rotation à 2000 tours par minute on nettoie le disque avec soit de l'éthanol, voire éventuellement de l'isopropanol. Le but de l'opération de nettoyage est l'enlèvement de toutes les poussières qui se trouvent sur le disque. Ces alcools ont l'avantage d'être miscibles à l'eau ce qui permet d'éliminer toute trace d'humidité éventuelle résultant d'un éventuel stockage du disque magnétooptique au froid. Le jet de produit de nettoyage est effectué par exemple par l'intermédiaire d'un compte-gouttes et est dirigé dans le sens de rotation du disque. Ainsi l'étalement du produit est plus efficace que si le jet de produit a lieu en sens inverse du sens de rotation. Deux à trois aspersions de produit de nettoyage de 1 à 2 millilitres (1 à 210⁻³ dm³) sont nécessaires pour assurer un nettoyage correct du disque. Dès que le nettoyage du disque est terminé, on passe à la séquence d'opération suivante S₁.

### - Séquence d'opération S₁ :

Cette séquence S₁ comprend les trois opérations OP₃, OP₄ et OP₅.

### Troisième opération OP₃ : première enduction :

Cette opération a lieu en utilisant le produit lubrifiant LUBI défini plus haut contenu dans une bombe aérosol BOMBI.

Ce produit lubrifiant est constitué par des principes actifs solides pour l'enduction du disque magnétooptique DISC, qui sont constitués de produits polymérisables dissous dans un mélange de solvants, qui peuvent être vaporisés grâce aux gaz vecteurs. Ainsi, le produit lubrifiant LUBI comprend une partie volatile comprenant gaz vecteurs et solvants :

Les gaz vecteurs sont composés d'un mélange complexe à base de fréon :
- dichlorodifluorométhane: C Cl₂F₂ (M = 120)
- trichlorofluorométhane: C Cl₃F (M = 136)
- trichloroéthane: C₂H₃Cl₃ (M = 132)
- dichloroéthane: CH₂Cl₂ (M = 84)

Le rôle des gaz vecteurs est de permettre l'expulsion hors de la bombe du produit actif dissous dans le ou les solvants. Il s'agit d'un rôle mécanique.

Les solvants sont composés d'un mélange complexe comprenant du :
- toluène (solvant polaire): C₇H₈ (M = 92)
- tétrachloroéthylène: C₂Cl₄ (M = 164)
- trichloroéthylène: C₂HC₁₃ (M = 130)
- N Butylacetate: C₆H₁₂O₂ (M = 116)
- ethylbenzène: C₈H₁₀ (M = 106)

Ces deux derniers produits pouvant servir d'additif comme élément polymérisable.

En plus de son rôle de solvant, ce mélange permet d'éviter la polymérisation des monomères actifs à l'intérieur de la bombe aérosol BOMBI. Il s'évapore plus ou moins rapidement à l'air permettant la polymérisation des produits actifs sur le substrat sur lesquels on les dépose (ici, le disque DISC, en l'occurrence).

Les principes actifs sont des monomères de composition CₓH_{y}O_{z} avec z < x, y

Avant d'être déposé sur le disque, ce produit lubrifiant doit être homogénéisé et dispersé dans le solvant qui est contenu dans la bombe BOMBI, laquelle est donc longuement secouée en tous sens.

La rotation du disque s'effectuant toujours à 2000 tours par minute, l'aspersion du produit lubrifiant se fait en orientant le jet de ce produit dans le sens de rotation à environ 45° du plan de la surface du disque ainsi qu'on peut le voir à la figure 3b où l'on a représenté fort schématiquement la position relative de la bombe BOMBI, inclinée avec un angle φ de 45° par rapport au plan de la surface du disque DISC. Une fois projeté sur le disque, le lubrifiant LUBI est entraîné sur la surface de celui-ci par centrifugation. La durée d'aspersion est de l'ordre de 1 à 2 secondes. Pour déposer sur toute la surface du disque, on déplace le jet produit par la bombe suivant un rayon partant du centre du disque vers l'extérieur. Il est parfaitement évident que seule la partie utile du disque (celle qui permet l'enregistrement d'informations sur celui-ci) comprise entre un cercle de rayon interne rᵢₙₜ, à savoir le cercle CINT et un cercle CEXT externe de rayon rₑₓₜ est enduite du produit lubrifiant LUBI. Le solvant s'évapore au contact du disque et permet au molécules actives monomères de se polymériser. Ces monomères de type CₓH_{y}O_{z} avec z < x, y polymérisent par addition de groupements CH ou CH₂ (liaisons acéthyléniques ou éthyléniques) ramifiés de types paraffiniques ou aromatiques. Certaines molécules polymères sont adsorbées par îlots sur la surface du disque DISC et elles voisinent avec des molécules du gaz vecteur chimique (vecteur) également adsorbées en d'autres endroits du disque. Par ailleurs, d'autres molécules actives de polymères sont en interaction d'une part, avec leurs homologues adsorbées par la couche superficielle en oxyde de silicium du disque DISC, et d'autre part avec des molécules du gaz vecteur adsorbé. Cet ensemble complexe d'espèces chimiques différentes qui sont en interaction différenciée avec la surface de la couche CPI et entre elles conduit à une couche superficielle hétérogène. Il est nécessaire d'effectuer alors l'opération OP₄ suivante pour y remédier.

### Quatrième opération OP₄ : dissolution :

Il convient donc d'éliminer, d'une part, les molécules actives qui ne sont pas en interactions fortes avec la surface de la couche CPI en oxyde de silicium, et d'autre part les molécules du gaz vecteur adsorbées par cette même couche CPI. Pour cela quelques secondes après l'enduction du produit lubrifiant, on pulvérise, par exemple, au moyen d'un compte-gouttes, un solvant sur le disque. Cette pulvérisation s'effectue également à environ 45° du plan de surface du disque de la même manière que s'est faite l'enduction du produit LUBI. Le solvant qui permet la dissolution la plus efficace permettant d'obtenir le résultat mentionné ci-dessus est le trichloréthylène. Deux à trois pulvérisations de ce solvant de deux à trois millilitres sont nécessaires. Le choix de ce solvant (trichloréthèlène) est tel que l'énergie de dissolution par ce dernier des molécules actives du produit en excès et celles du gaz vecteur est supérieur aux énergies d'interaction entre les molécules actives du produit et le solvant et à l'énergie d'adsorption solvant/substrat mais inférieure à l'énergie d'adsorption molécules actives du produit/substrat. De la sorte, on débarrasse ainsi le disque des molécules du produit et de celles du gaz vecteur en excès. Dès que l'opération OP₄ est terminée on passe ensuite à l'opération OP₅.

### Cinquième opération OP₅ : Opération de séchage (ou encore d'essuyage) :

Après l'opération de dissolution, l'évacuation de l'excès de produit à la surface de la couche CPI n'est pas totale. De petites taches de diamètre inférieur à 10 micromètres en général demeurent et des traces radiales apparaissent par endroit. Pour éliminer ces amorces de cristallites et ces traces radiales, deux solutions sont possibles :
a) Première solution : on effectue une opération d'essuyage au moyen par exemple d'une grande feuille de "Kimwipes" (produit mouchoir jetable) repliée sous la forme d'un rectagle d'environ 3 cm de large. Un bord de cette feuille est marqué par une pliure qui en assure la rigidité ce qui permet la prise en main de cette feuille. L'autre bord est maintenu courbé et est recouvert d'un tissu optique Whatman (ces tissus sont utilisés pour nettoyer les verres optiques). Cet ensemble constitué par la feuille de "Kimwipes" et le tissu optique Whatman est aspergé de solvant et appliqué sur tout le rayon du disque. Ce procédé d'essuyage bien connu permet l'évacuation des produits solides qui ne sont pas en interaction forte avec la surface sans perturber microscopiquement les films de produit lubrifiant déjà fortement adsorbés par celle-ci.
b) Deuxième solution : une opération préférable sur le plan de la mise en oeuvre industrielle consiste à effectuer une opération dite de séchage ou encore essuyage par soufflage de gaz. Cette opération a lieu par projection d'un gaz sous pression de 5 bars avec un pistolet, ce gaz étant par exemple de l'azote de type U, sa projection ayant lieu dans des conditions identiques à celle de l'enduction de produit lubrifiant (avec un angle φ de 45° par rapport au disque, dans le sens de rotation de ce dernier, vitesse de rotation 2000 tours par minute). Le séchage par le gaz sous pression élimine totalement le solvant ainsi que quelques petits amas de polymère sans laisser de trace radiale ni provoquer de rayure. La durée de cette opération de séchage par projection de gaz est de l'ordre de 60 secondes.

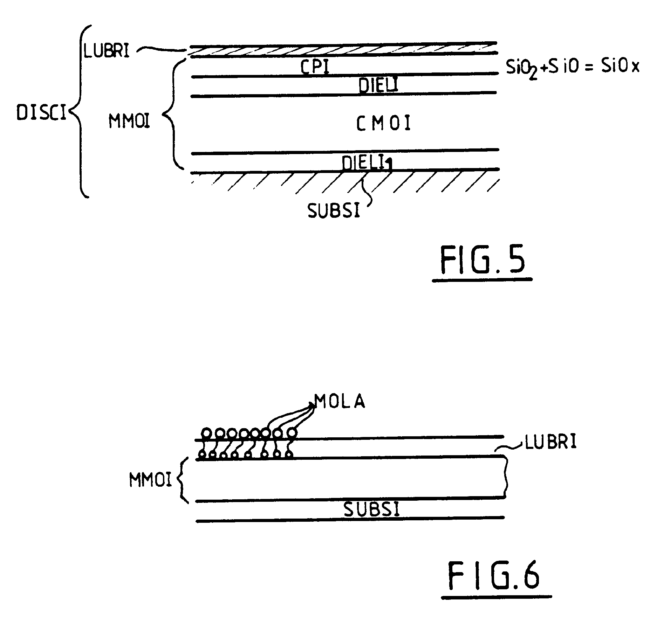

On a pu observer expérimentalement que pour obtenir le dépôt d'une couche LUBRI de lubrifiant LUBI sur la surface du disque DISC complètement homogène, permettant un vol correct de têtes d'écriture et de lecture en regard du disque, pendant un temps suffisamment long (plusieurs centaines d'heures) il était nécessaire d'effectuer au moins trois séquences d'opérations S₁, S₂, et S₃ identiques à la séquence S₁. La séquence S₂ comprend donc les opérations OP₆, OP₇, OP₈, alors que la séquence S₃ comprend les opérations OP₉, OP₁₀, OP₁₁. Dès que l'opération OP₁₁ est terminée, on procède à l'opération OP₁₂ qui consiste en l'évacuation du disque DISC, qui revêtu de sa couche LUBRI de lubrifiant LUBI, prend la dénomination DISCI. Ce disque est représenté à la figure 5 et comprend donc le substrat SUBSI, le milieu magnétooptique MMOI formé par la première couche diélectrique DIELI₁, la couche magnétooptique CMOI, la seconde couche diélectrique DIELI₂ et la couche de protection CPI en oxyde de silicium, et la couche lubrifiante LUBRI.

Cette couche lubrifiante LUBRI est formée, ainsi qu'on peut le voir à la figure 6 d'une couche monomoléculaire bidimensionnelle (c'est-à-dire quasiment planaire, son épaisseur étant de l'ordre de quelques millièmes de micromètre et en tout cas inférieure à un centième de micromètre). Cette couche monomoléculaire est formée de molécules à longues chaînes et à terminaisons polaires, la probabilité pour que ces terminaisons aient un moment électrique non nul étant très grande. Les extrémités libres de ces molécules forment une sorte de tapis brosse qui explique les propriétés lubrifiantes de ces couches monomoléculaires, ces terminaisons libres permettant aux molécules d'air MOLA de s'accrocher sur la couche monomoléculaire ce qui facilite l'existence du coussin d'air qui permet le vol des têtes d'écriture et de lecture en regard du disque.

En fait, la couche LUBRI consiste en une couche non lacunaire de polymères oxyhydrocarbonés, de très faible épaisseur (voir ci-dessus), transparente à la lumière. Ainsi qu'on a pu le voir ci-dessus, le nombre d'enductions nécessaire pour obtenir une couche non lacunaire est limité : en effet, après chaque enduction, le caractère lacunaire résiduel de la couche alors obtenue peut être éliminé car le mélange de solvants présente des énergies d'interaction molécules/surface traitée (couche DIELI₂) très inférieure aux énergies d'interaction couches polymères/surface traitée.

La couche polymère consiste essentiellement en une nappe majoritairement bidimensionnelle hydrocarbonée en interaction avec la surface du disque par un nombre limité de fonctions oxycarbonées C = 0. En fait, l'adsorption sur la surface du disque DISC (DIELI₂) se fait par le doublet libre de ces fonctions oxycarbonées. Une telle couche non lacunaire fixée par points discrets présente une très bonne propriété d'entraînement d'une couche d'air de vitesse pratiquement nulle par rapport à la surface lors de la rotation du disque DISC. C'est ce phénomène dit "couche immobile de Prandle" qui permet le vol de têtes de lecture. Un grand nombre de monomères ou mélange de monomères du type indiqué plus haut conduisant à la formation de couches polymères de ce type permettra le vol de têtes de lecture au dessus de disques magnétooptiques du type DISC.

On a pu constater expérimentalement que, après avoir fait voler une tête d'écriture/lecture plusieurs centaines d'heures en regard d'un disque magnétooptique DISCI (couche magnétooptique constituée de fer-terbium-gadolinium et cobalt, les couches diélectriques de nitrure d'aluminium, la couche de protection d'oxyde de silicium), revêtu d'une couche lubrifiante LUBRI déposée selon le procédé de l'invention, ce dernier ne présentait aucune rayure. Cela signifie que le vol de têtes d'écriture et de lecture s'effectue de façon tout à fait satisfaisante en regard d'un tel disque lubrifié par une couche déposée selon le procédé de l'invention. De semblables observations ont été effectuées avec des disques magnétooptiques dont la couche magnétooptique était constituée soit de fer-terbium, soit de fer-gadolinium, soit de fer-terbium-gadolinium, les couches diélectriques d'alumine, la couche de protection d'oxyde de silicium, les disques ayant été revêtus d'une couche lubrifiante LUBRI par le procédé selon l'invention. Ainsi plusieurs dizaines d'heures de vol ont pu être effectuées par des têtes d'écriture/lecture en regard d'un tel disque avec des têtes d'écriture/lecture dites à décollage, plusieurs milliers voire dizaines de milliers de décollage ayant été effectués.

Par ailleurs, d'autres disques DISCI revêtus d'une couche lubrifiante déposée selon le procédé de l'invention, ont été soumis successivement pendant plusieurs heures à des alternances d'atmosphère sèche et humide. On a ensuite fait voler des têtes d'écriture/lecture en regard de ces disques pendant plusieurs heures sans que l'on observe de rayure à la surface des disques.

Ainsi un premier disque ayant subi trois séquences S₁, S₂, S₃ d'enductions successives, le solvant utilisé étant du trichloréthylène, a été placé pendant sept mois à la température ambiante et a subi pendant 1 heure et 45 minutes, le vol d'une tête d'écriture/lecture sans qu'il apparaisse de dommage à la surface du disque. Un second disque ayant subi trois enductions de produit lubrifiant LUBI avec le trichloréthylène comme solvant a été soumis pendant trois jours à la température de 20° centigrade, pendant deux jours en atmosphère sèche à une température de 60°, pendant un jour à - 4° centigrade, pendant 75 jours à 20/22° centigrade et pendant 57 jours à 20°, a subi le test du vol d'une tête d'écriture/lecture pendant 3 heures 50 sans subir de dommage.

Un troisième disque ayant subi trois enductions successives en utilisant le trichloréthylène comme solvant, et en effectuant l'opération de séchage par de l'azote, a été soumis successivement 13 jours en atmosphère sèche à 60° puis 8 jours en atmosphère humide puis sèche à 60° et a subi le test du vol d'une tête d'écriture/lecture pendant 2 heures 35 minutes avec 50 arrêts et démarrages du disque, sans subir de dommage pendant ce vol.

Par ailleurs, un quatrième disque ayant également subi trois enductions avec le trichloréthylène comme solvant et l'opération de séchage effectuée avec de l'azote a été placé dans une enceinte thermique pendant 12 heures, successivement à des températures de 125° pendant 10 minutes, de - 55° pendant 10 minutes, et à nouveau à 125° pendant 10 minutes et ainsi de suite en atmosphère sèche, puis pendant 4 jours à température ambiante, pendant 3 jours en atmosphère sèche à 60°, pendant 4 jours en atmosphère humide à 60°, pendant 8 jours en atmosphère humide puis sèche à 60°, et a subi le test de vol pendant 3 heures 25 minutes avec 50 arrêts et démarrages sans subir de dommage.

En conclusion, on voit que le procédé selon l'invention permettant de déposer une couche lubrifiante à partir de produit lubrifiant LUBI est particulièrement efficace pour favoriser le vol de têtes d'écriture et de lecture en regard de ce disque.

## Revendications

1. Procédé pour déposer à la surface d'un disque magnétique (DISCI) une couche (LUBRI) permettant le vol de têtes d'écriture/lecture en regard de ce dernier, le disque magnétique comprenant un substrat (SUBSI) sur lequel est déposée une couche magnétique d'enregistrement (CMOI) recouverte elle-même d'une couche de protection (CPI) contre les chocs et la corrosion en oxyde de silicium, consistant à nettoyer au préalable le disque dans le but d'enlever les poussières caractérisé en ce que, après avoir nettoyé le disque, on effectue au moins une fois la séquence d'enduction de la surface du disque comportant la suite d'opérations suivantes :
a) on effectue une aspersion du disque en rotation dans le sens de celle-ci par un produit lubrifiant (LUBI) contenant d'une part une partie volatile formée de gaz vecteurs et de solvants et d'autre part des éléments monomères actifs oxyhydrocarbonés, lesquels sont polymérisés grâce à l'évaporation des solvants et adsorbés par la couche de protection (CPI),
b) on pulvérise un solvant sur le disque dans le sens de rotation pour éliminer les éléments actifs n'étant pas en interaction avec la couche de protection et les molécules du gaz vecteur adsorbées par celle-ci,
c) on essuie le disque pour éliminer les cristallites de polymère en excès sur le disque, le disque étant dès lors recouvert d'une couche non lacunaire monomoléculaire homogène bidimensionnelle de molécules hydrocarbonées adsorbées par la couche de protection.

2. Procédé selon la revendication 1, caractérisé en ce que les éléments monomères actifs sont de type CₓH_{y}O_{z} avec z < x, y et polymérisent par addition de groupements CH ou CH₂ (liaisons acéthyléniques ou éthyléniques) ramifiés de types paraffiniques ou aromatiques.

3. Procédé selon l'une des revendications 1 ou 2, caractérisé en ce que le gaz vecteur est un mélange complexe de dichlorodifluorométhane, trichlorofluorométhane, trichloroéthane et dichloroéthane.

4. Procédé selon l'une des revendications 1, 2, 3 caractérisé en ce que les solvants sont composés d'un mélange complexe comprenant du toluène, tétrachloroéthylène, trichloroéthylène, N-Butylacétate, ethylbenzène.

5. Procédé selon l'une quelconque des revendications 1, 2, 3, 4 caractérisé en ce que l'aspersion du disque par le produit lubrifiant s'effectue selon une incidence de près de 45° par rapport au plan du disque.

6. Procédé selon l'une quelconque des revendications 1, 2, 3, 4, 5 caractérisé en ce que le solvant pulvérisé lors de la seconde opération est du trichloréthylène.

7. Procédé selon l'une quelconque des revendications 1 à 6 caractérisé en ce qu'on essuie le disque par séchage d'azote projetée sous pression selon une incidence de près de 45° par rapport au plan du disque.

8. Disque magnétique (DISCI) comprenant un substrat (SUBSI) sur lequel est déposé une couche d'enregistrement magnétique (CMOI) revêtue d'une couche de protection en silicium (CPI) contre la corrosion et les chocs métalliques, caractérisé en ce qu'il comporte une couche superficielle permettant le vol de têtes d'écriture et de lecture, formé par une couche monomoléculaire bidimensionnelle constituée de molécules hydrocarbonées adsorbées par la couche de protection (CPI), en interaction avec la surface par un nombre limité de fonctions oxycarbonées.

9. Disque magnétique selon la revendication 8 caractérisé en ce que les molécules hydrocarbonées sont formées par addition de groupements CH ou CH₂ (liaisons acéthyléniques ou éthyléniques) ramifiés de types paraffiniques ou aromatiques.

## Claims

1. A process for depositing on the surface of a magnetic disk (DISCI) a layer (LUBRI) allowing the flight of write/read heads over the latter, the magnetic disk comprising a substrate (SUBSI) on which there is deposited a magnetic recording layer (CMOI), itself covered with a layer (CPI) for protection against shocks and corrosion, made of silicon oxide, consisting of first cleaning the disk for the purpose of removing dust, characterised in that, the disk having been cleaned, the sequence of coating the surface of the disk, comprising the following series of operations, is carried out at least once:
a) the disk is sprinkled, while in rotation, in the direction of rotation, with a lubricating product (LUBI) containing, on the one hand, a volatile part formed of vector gases and solvents and, on the other hand, oxyhydrocarbonated active monomeric elements, which are polymerised owing to the evaporation of the solvents and adsorbed by the protective layer (CPI),
b) a solvent is sprayed on the disk in the direction of rotation, to eliminate the active elements which are not in interaction with the protective layer and the molecules of the vector gas adsorbed by the latter,
c) the disk is wiped to eliminate excess polymer crystallites on the disk, the disk henceforward being covered with a bi-dimensional homogenous monomolecular non-lacunar layer of hydrocarbonated molecules adsorbed by the protective layer.

2. A process according to Claim 1, characterised in that the active monomeric elements are of the CₓH_{y}O_{z} type, with z < x, y and they polymerise by adding branched CH or CH₂ groups (acetylene or ethylene bonds) of paraffin or aromatic types.

3. A process according to one of Claims 1 or 2, characterised in that the vector gas is a complex mixture of dichlorodifluoromethane, trichlorofluoromethane, trichloroethane and dichloroethane.

4. A process according to one of Claims 1, 2, 3, characterised in that the solvents are composed of a complex mixture comprising toluene, tetrachloroethylene, trichloroethylene, N-butyl acetate, ethyl benzene.

5. A process according to any one of Claims 1, 2, 3, 4, characterised in that the sprinkling of the disk with the lubricating product takes place at an angle of incidence of nearly 45° with respect to the plane of the disk.

6. A process according to any one of Claims 1, 2, 3, 4, 5, characterised in that the solvent sprayed during the second operation is trichloroethylene.

7. A process according to any one of Claims 1 to 6, characterised in that the disk is wiped by drying with nitrogen projected under pressure at an angle of incidence of nearly 45° with respect to the plane of the disk.

8. A magnetic disk (DISCI) comprising a substrate (SUBSI) on which there is deposited a magnetic recording layer (CMOI) coated with a layer of silicon (CPI) for protection against corrosion and metallic shocks, characterised in that it comprises a surface layer allowing the flight of read and write heads, formed by a bi-dimensional monomolecular layer constituted by hydrocarbonated molecules adsorbed by the protective layer (CPI), in interaction with the surface by a limited number of oxycarbonated functions.

9. A magnetic disk according to Claim 8, characterised in that the hydrocarbonated molecules are formed by adding branched CH or CH₂ groups (acetylene or ethylene bonds) of paraffin or aromatic types.

## Patentansprüche

1. Verfahren zum Aufbringen einer Schicht (LUBRI) auf der Oberfläche einer Magnetplatte (DISCI), die den Flug der Schreib/Lese-Köpfe über dieser erlaubt, wobei die Magnetplatte ein Substrat (SUBSI) aufweist, auf dem eine magnetische Speicherschicht (CMOI) angebracht ist, die ihrerseits mit einer Schutzschicht (CPI) gegen Stöße und Korrosion aus Siliciumoxid überzogen ist, wobei die Platte vorher gereinigt wird, um Stäube zu beseitigen, dadurch gekennzeichnet, daß nach dem Reinigen der Platte wenigstens einmal die Formierungsfolge der Fläche der Platte durchgeführt wird, die nacheinander folgende Operationen umfaßt:
a) auf die Platte wird in ihrer Drehrichtung ein Schmiermittel (LUBI) aufgespritzt, das einerseits einen flüchtigen Anteil aus Trägergasen und Lösungsmitteln und andererseits Elemente in Form oxidgruppenhaltiger Kohlenwasserstoffmonomere enthält, die aufgrund der Verdampfung der Lösungsmittel polymerisiert und von der Schutzschicht (CPI) adsorbiert werden,
b) auf die Scheibe wird in ihrer Drehrichtung ein Lösungsmittel aufgestäubt, um die nicht mit der Schutzschicht in Wechselwirkung stehenden aktiven Elemente und die Moleküle des von dieser adsorbierten Trägergases zu eliminieren,
c) die Scheibe wird abgewischt, um die überschüssigen Polymer-Kristallite auf der Scheibe zu beseitigen, wobei die Scheibe dann mit einer geschlossenen monomolekularen, homogenen, zweidimensionalen Schicht aus von der Schutzschicht adsorbierten Kohlenwasserstoffmolekülen überzogen wird.

2. Verfahren nach Anspruch 1, dadurch gekennzeichnet, daß die aktiven monomeren Elemente vom Typ CₓH_{y}O_{z} sind, mit z < x, y und durch Hinzufügen von verzweigten CH- oder CH₂-Gruppen (Acethylen- oder Äthylen-Bindungen) vom paraffinischen oder aromatischen Typ polymerisieren.

3. Verfahren nach einem der Ansprüche 1 oder 2, dadurch gekennzeichnet, daß das Trägergas eine komplexe Mischung aus Dichlordifluormethan, Trichlorfluormethan, Trichloräthan und Dichloräthan ist.

4. Verfahren nach einem der Ansprüche 1, 2, 3, dadurch gekennzeichnet, daß die Lösungsmittel aus einer komplexen Mischung zusammengesetzt sind, die Toluol, Tetrachloräthylen, Trichloräthylen, N-Butylacetat, Äthylbenzol enthält.

5. Verfahren nach einem der Ansprüche 1, 2, 3, 4, dadurch gekennzeichnet, daß das Besprengen der Scheibe mit dem Schmiermittel unter einem Einfallswinkel von nahe 45° bezüglich der Scheibenebene erfolgt.

6. Verfahren nach einem der Ansprüche 1, 2, 3, 4, 5, dadurch gekennzeichnet, daß das bei der zweiten Operation aufgestäubte Lösungsmittel Trichloräthylen ist.

7. Verfahren nach einem der Ansprüche 1 bis 6, dadurch gekennzeichnet, daß das Abwischen der Scheibe durch Trocknung mittels Stickstoff erfolgt, der unter Druck mit einem Einfallswinkel nahe 45° bezüglich der Scheibenebene aufgebracht wird.

8. Magnetische Scheibe (DISCI) mit einem Substrat (SUBSI) auf dem eine magnetische Speicherschicht (CMOI) aufgebracht ist, die mit einer Schutzschicht (CPI) aus Silicium gegen Korrosion und metallische Stöße überzogen ist, dadurch gekennzeichnet, daß sie eine Oberflächenschicht aufweist, die den Flug der Schreib- und Leseköpfe ermöglicht und die durch eine zweidimensionale monomolekulare Schicht gebildet ist, die aus durch die Schutzschicht (CPI) adsorbierten Kohlenwasserstoffmolekülen besteht, die durch eine begrenzte Anzahl von Oxid-Kohlenstoff-Funktionen mit der Fläche in Wechselwirkung stehen.

9. Magnetische Scheibe nach Anspruch 8, dadurch gekennzeichnet, daß die Kohlenwasserstoffmoleküle durch Hinzufügen von verzweigten CH- oder CH₂-Gruppen (Acethylen- oder Äthylen-Verbindungen) vom paraffinischen oder aromatischen Typ gebildet sind.
